# EUROPÄISCHE PATENTANMELDUNG

(11) **EP 0 933 614 A2**
(43) Veröffentlichungstag der Anmeldung: **04.08.1999**
(21) Anmeldenummer: 99101863.1
(22) Anmeldetag: 28.01.1999
(51) Int. Cl.: G01C 15/00

(54) **Reflexionsanordnung zur Verwendung beim Messen der Koordinaten eines Vermessungspunktes mittels eines Tachymeters**

(30) Priorität: 31.01.1998 DE 29801635 U
(71) Anmelder: Poltinger, Alwin, 80339 München (DE)
(72) Erfinder: Poltinger, Alwin, 80339 München (DE)

(57) **Zusammenfassung**

Beim Messen der Koordinaten eines Vermessungspunktes mittels eines Tachymeters wird eine Reflexionsanordnung mit mindestens einem durch ein Lichtabdeckteil abdeckbaren Prisma verwendet, welches das von dem Tachymeter abgegebene Licht aufnimmt und an dieses reflektiert. Bei dieser Reflexionsanordnung besteht das Lichtabdeckteil aus einem jeweils ein Prisma (9) zumindest teilweise umschließenden Zylindermantel (10) aus lichtdichtem Material, der in seiner Mantelfläche ein Fenster (11) aufweist und der um seine Längsachse (13) derart drehbar ist, dass das Fenster (11) für den Lichteinfall in die Achse des Lichtstrahls (12) bewegbar bzw. das Prisma (9) durch den Zylindermantel (10) abdeckbar ist.

## Beschreibung

### Technisches Gebiet:

Die Erfindung betrifft eine Reflexionsanordnung mit mindestens einem durch ein Lichtabdeckteil abdeckbaren Prisma zur Verwendung beim Messen der Koordinaten eines Vermessungspunktes mittels eines Tachymeters gemäß dem Oberbegriff des Patentanspruchs 1.

### Stand der Technik:

Bei derzeit üblichen Tachymetem sind nicht nur die Entfernungsmesser, sondern auch die automatische Zielsuche im Femrohr eingebaut. Insbesondere im Tunnelbau, und zwar beim Vortrieb mit Vortriebsmaschinen, liegen bei der Einmessung einer Tunnelgradiente die Ziele, die vom Tachymeter anvisiert werden, räumlich oft so eng beieinander, daß das Tachymeter die Ziele nicht immer eindeutig auseinanderhalten kann. Wenn sowohl vom Lichtstrahl des Entfernungsmessers, als auch von der Zielsuchautomatik mehrere Prismen erkannt werden, ist die Messung entweder fehlerhaft oder wird ganz abgebrochen.

Um auch bei beengten Platzverhältnissen und insbesondere an schwer zugänglichen Orten Vermessungspunkte präzise bestimmen zu können, ist schon eine Reflexionsanordnung mit zwei an einem Tragteil angeordneten Schichtprismen bekannt geworden, wobei ein Lichtabdeckteil zum Abdecken jeweils eines der Schichtprismen vorgesehen ist (DE 40 38 521 C2). Das Lichtabdeckteil kann entweder als Kappe ausgebildet oder durch eine Blende gebildet sein, die vor jeweils eines der beiden Schichtprismen geschoben werden kann. Abgesehen davon, daß diese Reflexionsanordnung daran gebunden ist, daß jeweils zwei Schichtprismen in engem räumlichen Abstand voneinander an einem Tragteil angeordnet sind, entstehen durch das Verschieben einer Blende hin- und hergehende Bewegungen, die Erschütterungen hervorrufen können, welche das Meßergebnis beeinträchtigen.

### Darstellung der Erfindung:

Vor diesem Hintergrund liegt der Erfindung die Aufgabe zugrunde, eine Reflexionsanordnung der eingangs angegebenen Art zu schaffen, die auch dann einwandfreie Meßergebnisse liefert, wenn, wie vor allem im Tunnelbau vorherrschend, mehrere Prismen im Sehfeld des Femrohrs oder des Meßstrahls des Entfernungsmessers hintereinander liegen, die einzeln nacheinander angemessen werden müssen.

Gemäß der Erfindung wird diese Aufgabe durch eine Reflexionsanordnung mit den im Anspruch 1 angegebenen Merkmalen gelöst; eine äquivalente Lösung ist im Anspruch 7 angegeben.

Vorteilhafte Weiterbildungen ergeben sich aus den Unteransprüchen.

Der erste Lösungsgedanke der Erfindung besteht darin, das Lichtabdeckteil als jeweils ein Prisma umschließenden Zylindermantel auszubilden, der in seiner Mantelfläche ein Fenster aufweist und der um seine Längsachse so gedreht werden kann, daß entweder durch das Fenster der Einfall des Lichtstrahls auf das Prisma ermöglicht bzw. das Prisma durch den Zylindermantel abgedeckt wird. Von besonderem Vorteil ist dabei, daß die Bewegung des Zylindermantels, die notwendig ist, um das Prisma freizugeben bzw. abzudecken, eine Drehbewegung um die Längsachse des Zylindermantels ist, bei der nur sehr geringe Massen bewegt werden, die also weitestgehend erschütterungsfrei abläuft.

Der zweite Lösungsgedanke vermeidet jegliche mechanische Bewegung, indem eine elektronische Blende, z.B. eine Flüssigkristallanzeige (LCD), in den Strahlengang geschaltet wird, die rechnergesteuert auf- und abgeblendet werden kann.

Kurze Beschreibung der Zeichnungen:

Die Erfindung wird nachstehend anhand der Zeichnung näher erläutert. Es zeigt
- Fig. 1: eine Schrägansicht einer Reflexionsanordnung nach der Erfindung,
- Fig. 2: eine Untersicht,
- Fig. 3: einen Längsschnitt durch ein Ausführungsbeispiel der Erfindung entlang der Linie III-III in Fig. 4
- Fig. 4: einen Querschnitt entlang der Linie IV-IV in Fig. 3,
- Fig. 5: einen Längsschnitt durch ein anderes Ausführungsbeispiel der Erfindung entlang der Linie V-V in Fig. 6 und
- Fig. 6: einen Querschnitt entlang der Linie VI-VI in Fig. 5.

Wege zur Ausführung der Erfindung und gewerbliche Verwertbarkeit:

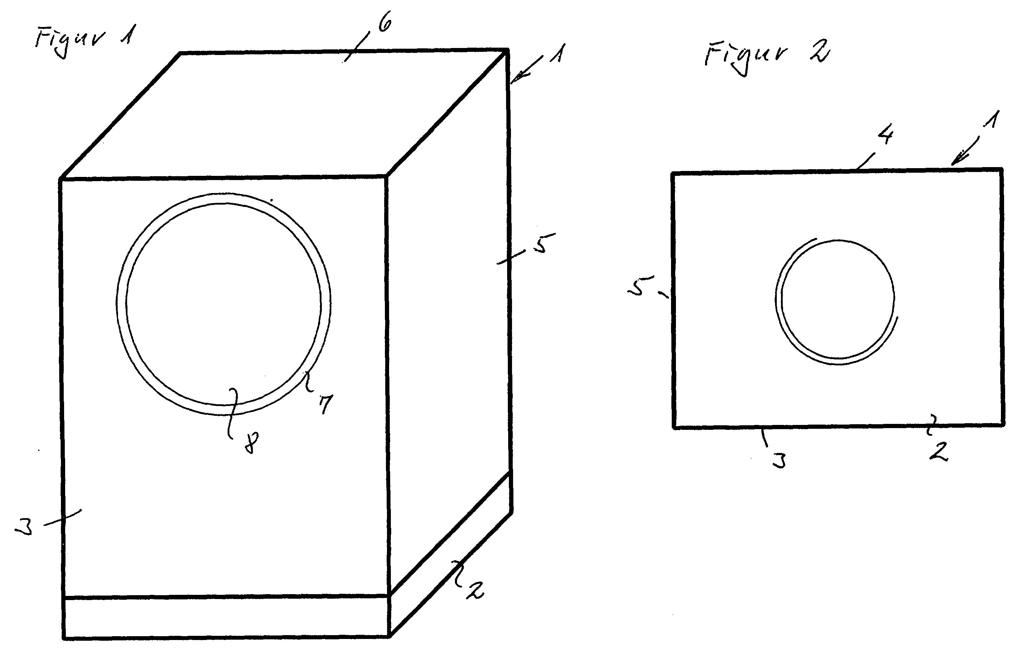

Die in den Zeichnungen nur schematisch dargestellte Reflexionsanordnung nach der Erfindung ist, wie Fig. 1 zeigt, in einem rechteckigen Gehäuse 1 mit einem Gehäuseunterteil 2 untergebracht. Das Gehäuse 1 hat zum Beispiel Abmessungen von 6 x 8 cm im Querschnitt und 11 cm in der Höhe.

Das Gehäuse 1 besitzt eine Vorderwand 3, eine Rückwand 4 und zwei Seitenwände 5 sowie eine obere Deckplatte 6. Die Vorderwand 3 zeigt ein zweckmäßig kreisförmiges Fenster 7, das durch ein Schutzglas 8 den Einfall eines Lichtstrahls auf ein im Inneren des Gehäuses 1 angeordnetes Prisma 9 ermöglicht.

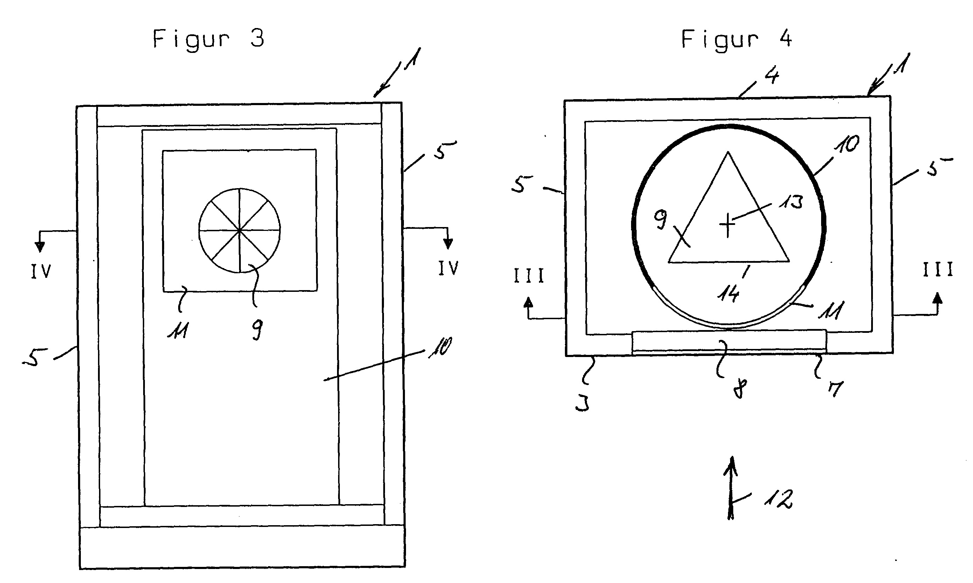

Ein erstes Ausführungsbeispiel der Erfindung ist in den Fig. 3 und 4 dargestellt. Wie insbesondere Fig. 4 als Horizontalschnitt durch die Reflexionsanordnung bzw. das Gehäuse 1 erkennen läßt, befindet sich das Prisma 9 innerhalb des Gehäuses 1; es ist von einem Zylindermantel 10 als Lichtabdeckteil umschlossen. Der Zylindermantel 10 hat im dargestellten Beispiel kreisförmigen Querschnitt; er besitzt an einer Stelle seines Umfangs ein Fenster 11, das im dargestellten Ausführungsbeispiel der Fig. 3 und 4 den Eintritt eines durch einen Pfeil 12 symbolisierten Lichtstrahls auf das Prisma 9 zuläßt. Das Fenster 11 ist im einfachsten Fall als Durchbrechung in dem Zylindermantel 10 ausgebildet, der im übrigen aus lichtundurchlässigem Material besteht. Mittels eines zum Beispiel im Gehäuseunterteil 2 angeordneten Elektromotors kann der Zylindermantel 10 um seine Längsachse 13 so gedreht werden, daß beispielsweise das Fenster 11 zur Seite oder nach rückwärts zeigt, so daß die vordere Lichteinfallseite 14 des Prismas 9 durch den Zylindermantel 10 abgedeckt wird.

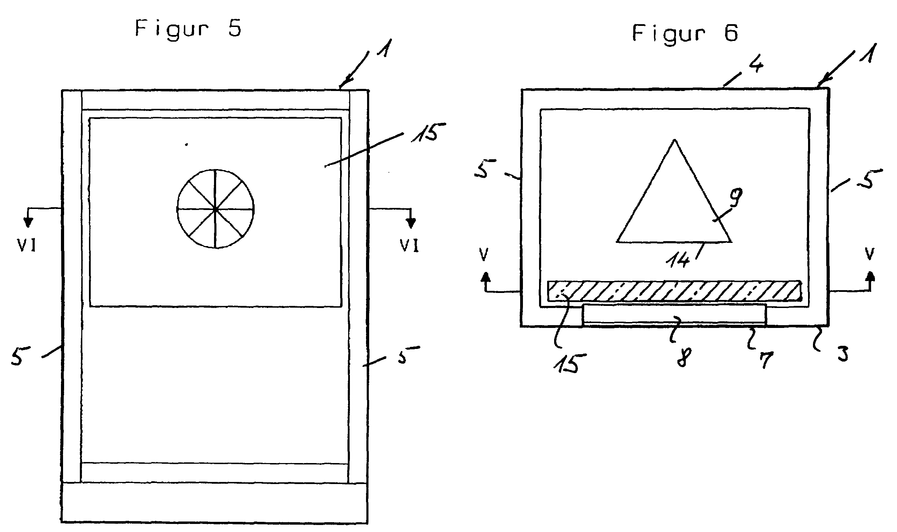

Ein weiteres Ausführungsbeispiel der Erfindung ist in den Fig. 5 und 6 ebenfalls im Längs- und Querschnitt dargestellt. Hier ist innerhalb des Gehäuses 1 hinter dem Fenster 8 in der Vorderwand 3 eine elektronische Blende 15, z.B. eine Flüssigkristallanzeige (LCD), angebracht, das durch einen zum Beispiel von einem Rechner ausgelösten Steuerbefehl durchsichtig bzw. undurchsichtig gemacht werden kann.

Durch die Anordnung von Blenden gemäß der Erfindung kann auch dann, wenn, wie beispielsweise im Tunnelbau, mehrere Prismen auf kleinstem Raum hintereinander angeordnet sind, bei der Bestimmung der Istlage einer Vortriebsmaschine immer nur ein bestimmtes Prisma "gesehen" und gemessen werden.

Wenn zu einer Reflexionsanordnung mehrere Prismen gehören, dann werden deren Blenden zweckmäßig durch den Rechner zugleich mit dem Tachymeter angesteuert. Dabei werden in das Rechnerprogramm Befehle dahingehend aufgenommen, daß mit der Ansteuerung des ersten Prismas dieses auf- und das zweite Prisma abgeblendet wird, während mit Ansteuerung des zweiten Prismas dieses auf- und das erste Prisma abgeblendet wird.

## Patentansprüche

1. Reflexionsanordnung mit mindestens einem durch ein Lichtabdeckteil abdeckbaren Prisma zur Verwendung beim Messen der Koordinaten eines Vermessungspunktes mittels eines Tachymeters, welches Licht an die Reflexionsanordnung abgibt und das von dieser reflektierte Licht aufnimmt, dadurch gekennzeichnet, daß das Lichtabdeckteil als jeweils ein Prisma (9) zumindest teilweise umschließender Zylindermantel (10) aus lichtdichtem Material ausgebildet ist, der in seiner Mantelfläche ein Fenster (11) aufweist und der um seine Längsachse (13) derart drehbar ist, daß das Fenster (11) für den Lichteinfall in die Achse des Lichtstrahls bewegbar bzw. das Prisma (9) durch den Zylindermantel (10) abdeckbar ist.

2. Reflexionsanordnung nach Anspruch 1, dadurch gekennzeichnet, daß das Fenster (11) als Durchbrechung in dem Zylindermantel (10) ausgebildet ist.

3. Reflexionsanordnung nach Anspruch 1 oder 2, dadurch gekennzeichnet, daß das Fenster (11) rechteckigen Umriß hat.

4. Reflexionsanordnung nach einem der Ansprüche 1 bis 3, dadurch gekennzeichnet, daß der Zylindermantel (10) kreisförmigen Querschnitt hat.

5. Reflexionsanordnung nach einem der Ansprüche 1 bis 4, dadurch gekennzeichnet, daß die Längsachse des Zylindermantels (10) vertikal verläuft.

6. Reflexionsanordnung nach einem der Ansprüche 1 bis 5, dadurch gekennzeichnet, daß der Zylindermantel (10) durch einen Elektromotor antreibbar ist

7. Reflexionsanordnung mit mindestens einem durch ein Lichtabdeckteil abdeckbaren Prisma zur Verwendung beim Messen der Koordinaten eines Vermessungspunktes mittels eines Tachymeters, welches Licht an die Reflexionsanordnung abgibt und das von dieser reflektierte Licht aufnimmt, dadurch gekennzeichnet, daß als Lichtabdeckteil im Strahlengang vor dem Prisma (9) eine elektronische Blende (15), z.B. eine Flüssigkristallanzeige (LCD), angeordnet ist, die zum Beispiel durch einen Rechner so ansteuerbar ist, daß sie für den Lichteinfall durchsichtig und zur Abdeckung des Prismas (9) undurchsichtig ist.

8. Reflexionsanordnung nach einem der Ansprüche 1 bis 7, dadurch gekennzeichnet, daß jeweils ein Prisma (9) mit dem zugehörigen Lichtabdeckteil von einem Gehäuse umschlossen ist.
